# EUROPEAN PATENT SPECIFICATION

(11) **EP 2 612 740 B1**
(45) Date of publication and mention of the grant of the patent: **25.02.2015**
(21) Application number: 11821294.3
(22) Date of filing: 26.08.2011
(51) Int. Cl.: B29B 7/48, B29B 7/72, B29C 47/10, B29C 47/64, B29C 47/92, B29C 47/00

(54) **METHODS FOR ADJUSTING THE VISCOSITY OF POLYPROPYLENE USING AN EXTRUDER, AND EXTRUDER THEREFORE**
VERFAHREN ZUR EINSTELLUNG DER VISKOSITÄT EINES POLYPROPYLENS MITHILFE EINES EXTRUDERS, SOWIE EXTRUDER HIERFÜR
PROCÉDÉS POUR L'AJUSTEMENT DE LA VISCOSITÉ DE POLYPROPYLÈNE UTILISANT UNE EXTRUDEUSE, ET EXTRUDEUSE DESTINÉE À L'APPLICATION DES PROCÉDÉS

(30) Priority: 01.09.2010 JP 2010195322
(43) Date of publication of application: 10.07.2013
(73) Proprietor: Kabushiki Kaisha Kobe Seiko Sho, Chuo-ku Kobe-shi Hyogo 651-8585 (JP)
(72) Inventor: HOTANI, Shin, Hyogo 676-8670 (JP); KURODA, Yoshinori, Hyogo 676-8670 (JP); YAMAGUCHI, Kazuo, Hyogo 676-8670 (JP); YAMANE, Yasuaki, Hyogo 676-8670 (JP)
(74) Representative: TBK
(86) International application number: PCT/JP2011/004767
(87) International publication number: WO 2012/029271

(56) References cited:
- EP-A1- 0 537 701
- EP-A1- 0 632 062
- JP-A- 8 276 422
- JP-A- H10 202 652
- JP-A- 2000 309 017
- JP-A- 2005 007 658
- JP-A- 2007 015 348
- US-A- 4 181 647
- US-A- 5 672 005
- US-B1- 6 525 126

## Description

### [Technical Field]

The present invention relates to methods for adjusting the viscosity of a polypropylene using a mixing extruder for resin, and a mixing extruder for resin.

### [Background Art]

Conventionally, there has been a mixing extruder for melting raw resin (resin powder) such as polypropylene and mixing it with various additives. This mixing extruder is used for a production method called vis-braking or cracking. Specifically, raw resin is fed from a raw material feeder (raw material feed hopper) to the mixing extruder and peroxide is also fed to the mixing extruder simultaneously with the feed of the raw resin. The fed raw resin and peroxide are mixed in the mixing extruder to react with each other at a high temperature. This reaction cuts intermolecular main chains of the raw resin to reduce the molecular weight of the raw resin. The viscosity and melt flow rate of resin pellets as a product are thereby adjusted. Such a mixing extruder is disclosed, for example, in JP H08-276422 A**.**

Sufficient reaction between the peroxide and the raw resin require specified residence time and mixed resin temperature. Necessary residence time and mixed resin temperature differ depending on the type of the peroxide. The residence time means a residence time of a mixture of the peroxide and the raw resin in the mixing extruder, i.e. a mixing time. The mixed resin temperature means the temperature of the raw resin and the peroxide in the mixing extruder, i.e. an ambient temperature or an operating resin temperature.

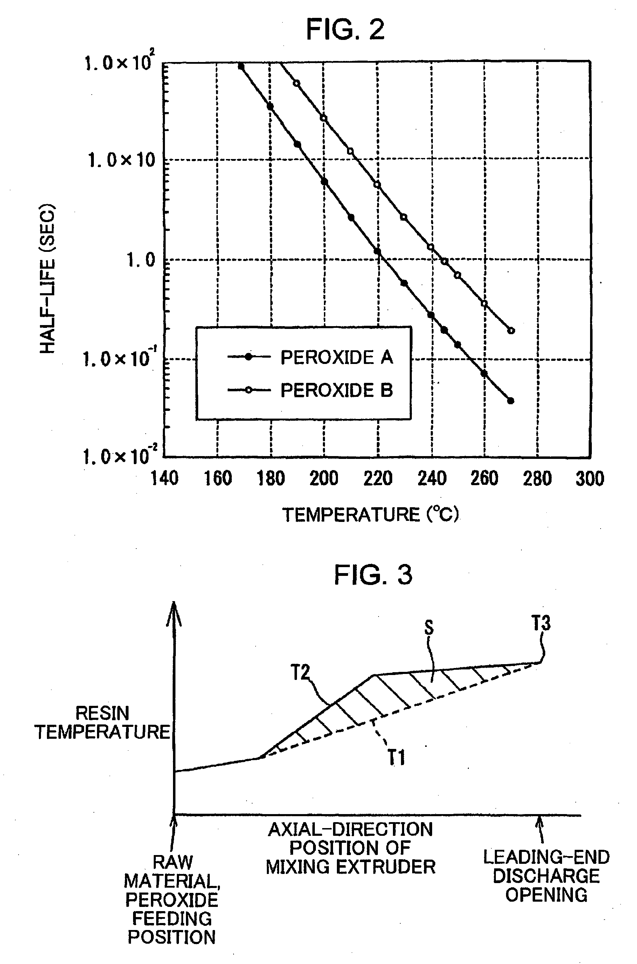

A graph of FIG. 2 shows a relationship between the half-life of peroxide (i.e. reaction time of peroxide) and temperature. Peroxide A, though having a half-life shorter than 10 seconds at 200°C, can react with a raw resin without any problem at a residence time and a mixed resin temperature in the conventional mixing extruder. Thus, product resin pellets can be adjusted to a required viscosity by use of the peroxide A in the conventional mixing extruder.

However, peroxide being tested for new use in recent years has a long half-life, e.g. a half-life equal to or longer than 10 seconds at 200°C as shown in FIG. 2. Hereinafter, this is called peroxide B. Sufficient reaction of this peroxide B and the raw resin requires longer residence time and higher mixed resin temperature are required for as compared to the peroxide A. Thus, the use of peroxide B in the conventional mixing extruder as disclosed in patent literature 1 makes the residence time and the mixed resin temperature insufficient and makes the peroxide B and the raw resin not sufficiently react, thus causing the possibility of failing to adjust product resin pellets to a required viscosity. Furthermore, although a residual volume of the peroxide in the product resin pellets is preferably equal to or less than 10 ppm from the standpoint of environment, the peroxide exceeding 10 ppm may remain. Hereinafter, the residual volume of the peroxide in the product resin pellets discharged from the mixing extruder is merely referred to as a "residual volume of the peroxide".

According to the graph shown in FIG. 2, increasing the mixed resin temperature and the residence time enables more peroxide to react. Specifically, the greater the product of the mixed resin temperature and the residence time, the more peroxide reacts. Accordingly, as a method for increasing the mixed resin temperature, it can be considered to form the shape of mixing wings of a screw of the mixing extruder into shapes of strongly kneading or to increase the rotational speed of the screw. The "shapes of strongly kneading" include, for example, a shape having a small twist angle of the mixing wings and a large axial length, a shape in which the mixing wings are reversely twisted and a shape including kneading discs or mixing rotor segments. As a method for increasing the residence time, it can be considered to make a barrel of the mixing extruder longer or increase the inner diameter of the barrel.

The mixing wings of the screw having the shape of strongly kneading can produce a high mixed resin temperature. On the other hand, in the case of adjusting the viscosity of a high-viscosity resin, the mixed resin temperature is preferably lower from the standpoint of saving energy and granulation performance at a downstream side. However, just forming the mixing wings of the screw into shapes of strongly kneading is not enough to make it possible to adjust the mixed resin temperature according to the viscosity of the resin to be produced.

Increase in the rotational speed of the screw increases the mixed resin temperature. However, a range of the mixed resin temperature adjustable by the screw rotational speed is not sufficient. Hence, it is impossible to set the mixed resin temperature to a temperature which is a relatively low temperature appropriate at the time of producing a high-viscosity resin and a relatively high temperature necessary for sufficient reaction of the peroxide B when the peroxide B described above is used.

Making the mixing extruder longer or increasing the inner diameter of the barrel extends he residence time. However, this excessively increases cost in the case of producing a high-viscosity resin. Furthermore, an excessively long residence time may excessively increase the mixed resin temperature.

**Furthermore, a mixing extruder according to the preamble of claim 1 is known from** US 6 525 126 B1**. A further mixing extruder is known from** EP 0 632 062 A1**.**

### [Summary of Invention]

An object of the present invention is to provide a method for adjusting the viscosity of a polypropylene, the method being capable of treating polypropylenes having various melt flow rates by use of peroxide and suppressing a residual volume of the peroxide, even if the peroxide has a half-life equal to or longer than 10 seconds at 200°C, while not involving considerable enlargement of a mixing extruder, and an mixing extruder suitable for this method.

The above object is solved with methods having the features of claims 1 and 3, respectively, as well as with a mixing extruder having the features of claim 5.

### [Brief Description of Drawings]

FIG. 1 is a front view in section of a mixing extruder according to a first embodiment of the invention,
FIG. 2 is a graph showing a relationship between half-time of peroxide and temperature,
FIG 3 is a graph diagrammatically showing a temperature distribution of a polypropylene in the mixing extruder, and
FIG. 4 is a front view in section of a mixing extruder according to a second embodiment of the invention.

### [Embodiments of Invention]

### (First Embodiment)

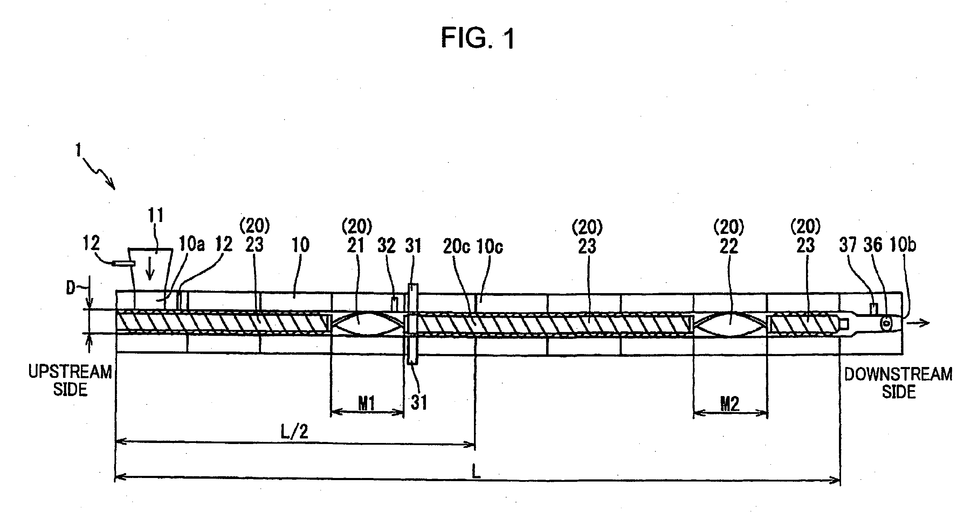

There will be described a mixing extruder and a viscosity adjustment method in the mixing extruder according to a first embodiment of the present invention below with reference to FIGS. 1 to 3.

A mixing extruder 1 according to this embodiment is, as shown in FIG 1, a machine for mixing resin (polypropylene) and peroxide to adjusting the viscosity of the resin, that is, melting powder resin poured from a raw material feed hopper 11 and, at the same time, kneading the peroxide into the resin to bring them into a chemical reaction. This mixing extruder 1 can also constitute a mixing/granulating apparatus for manufacturing product resin pellets together with an unillustrated granulator.

The mixing extruder 1 includes a barrel 10, the raw material feed hopper 11 attached to the barrel 10, peroxide feeder 12 attached to the barrel 10 or the raw material feed hopper 11, a pair of screws 20 arranged in the barrel 10, a gate device 31 (first flow path throttling mechanism) and a butterfly valve 36 (second flow path throttling mechanism) provided in the barrel 10.

The barrel 10 is a tubular member inside which the screws 20 is arranged and has an upstream end portion and a downstream end portion. The barrel 10 is formed with a raw material feed opening 10a near the upstream end portion, through which opening a raw material is fed into the barrel 10. The barrel 10 is formed with a leading-end discharge opening 10b at the downstream end portion, through which opening the material, i.e. the mixed resin is discharged.

The raw material feed hopper 11 is a device for introducing resin powder as a powder raw material, specifically, powder polypropylene, into the barrel 10. The raw material feed hopper 11 is connected to the raw material feed opening 10a of the barrel 10.

The peroxide feeder 12 is a section for feeding peroxide B to the raw material. The peroxide feeder 12 is provided upstream of first mixing wings 21 to be described later. This peroxide feeder 12 may be attached to the raw material feed hopper 11 to feed the peroxide B into the raw material feed hopper 11 or may be attached to an upstream region of the barrel 10 to directly feed the peroxide B into the barrel 10. The peroxide feeder 12 only have to be capable of feeding a liquid peroxide or a powder peroxide to the raw material, constituted by, for example, a not shown nozzle or hopper.

The peroxide B fed from the peroxide feeder 12 has a half-life equal to or longer than 10 seconds at 200°C. This half-life may be substantially just 10 seconds. FIG. 2 shows a relationship between the half-life of this peroxide B and temperature. The peroxide B has a shorter half-life at a higher temperature. That is, the higher the temperature, the higher a reaction rate.

The screws 20 are arranged parallel to each other inside the barrel 10, while only a front screw 20 of them is shown in FIG. 1. The mixing extruder according to the present invention may include a single screw or three or more screws.

As shown in FIG. 1, the respective screws 20 are arranged inside the barrel 10 and rotating about their respective center axes to thereby convey the resin, more specifically the material to be mixed including the polypropylene and the peroxide, from the raw material feed opening 10a at the upstream side to the leading-end discharge opening 10b at the downstream side by. A length L of the respective screws 20 in the barrel 10 is so set as to make L/D be equal to or larger than 30 (that is, L/D ≥ 30) when D denotes the inner diameter of the barrel 10, i.e. the inner diameter of a circular hole housing the respective screws 20. The upper limit of the L/D is generally about 40 from the standpoint of torsionaln rigidity of screw shafts and manufacturing.

The resin conveyed by the screws 20 is specifically the material to be mixed including the polypropylene and the peroxide.

Each of the screws 20 includes the first mixing wing 21, a second mixing wing 22 and a feeding wing 23. In this specification, a ratio Vm/V is called a filling ratio, which is a ratio of a volume Vm of the polypropylene to a volume V between the barrel 10 and the screw 20 in the mixing wings 21, 22 and the feeding wing 23.

The respective mixing wings 21, 22 are sections for mixing and heating the polypropylene, provided at an upstream region and a downstream region of each screw 20, respectively. The mixing wings 21, 22 are specifically, for example, kneading discs or mixing rotor segments. If being too short, the mixing wings 21, 22 generate no mixing effect for the polypropylene. In view of this, respective lengths M1, M2 of the mixing wings 21, 22 are so set as to satisfy M1/D ≥ 1 and M2/D ≥ 1 with respect to the inner diameter D of the barrel 10.

The first mixing wing 21 is one that are arranged at a most upstream side of all the mixing wings, that is, the mixing wings 21, 22 in this embodiment, in each of the screws 20 to perform mixing at first. The first mixing wing 21 is located upstream of longitudinal central part 20c of each of the screws 20 in the barrel 10. In other words, the first mixing wing 21 is arranged in a length range of L/2 of each of the screws 20 at the upstream side. The first mixing wings 21 are preferably located at positions close to the upstream end portions of the screws 20, i.e. at positions close to the raw material feed opening 10a of the barrel 10. This enables the temperature of the polypropylene to be raised at a more upstream side, that is, enables a product of the temperature and a moving distance of the polypropylene (area S in FIG. 3) to be larger.

The second mixing wings 22 is one provided downstream of each of the first mixing wing 21 and arranged at a most downstream side to perform mixing at last out of the mixing wings 21, 22, which are all the mixing wings in this embodiment. Each of the second mixing wing 22 is located downstream of the gate device 31 equivalent to the first flow path throttling mechanism and, in this embodiment, located downstream of the longitudinal central part 20c of each of the screws 20 in the barrel 10.

The gate device 31 and the butterfly valve 36 are equivalent to the first and second flow path throttling mechanisms respectively and changes in their respective openings allow a passage area for the polypropylene in the barrel 10, i.e. an area of a material flow path when the gate device 31 and the butterfly valve 36 are viewed in a longitudinal direction of the screws 20 to be adjusted. As the area of the material flow path is reduced by narrowing the openings of the gate device 31 and the butterfly valve 36, the filling ratios of the polypropylene mixed by the mixing wings located at the upstream sides of the gate device 31 and the butterfly valve 36 are increased, the temperature of the polypropylene rises and a residence time is extended.

This mixing extruder further includes temperature sensors 32, 37 for detecting the temperature of the polypropylene. The temperature sensor 32 is disposed upstream of the gate device 31 and the temperature sensor 37 is disposed upstream of the butterfly valve 36. The respective openings of the gate device 31 and the butterfly valve 36 are adjusted according to the respective temperature of the polypropylene detected by the respective temperature sensors 32, 37.

The gate device 31 as the first flow path throttling mechanism is able to increase and change the filling ratio of the polypropylene mixed by the first mixing wing 21 at the most upstream side. In other words, it is able to increase the filling ratio of the polypropylene at the upstream side of the longitudinal central part 20c of the screw 20 in the barrel 10. The opening of the gate device 31 can be narrowed so as to reduce the area of the polypropylene flow path to a lower limit area equal to or below 20 %, e.g. an area of 15 %, if the area when the gate device 31 is fully open is let 100 %. In short, the opening of the gate device 31 is adjustable in a range from a specified lower limit opening equal to or below 20 % to 100 %.

The gate device 31 is provided at a position downstream of the first mixing wings 21 as the mixing wings at the most upstream side and upstream of the second mixing wings 22, e.g. at a position downstream of and adjacent to the first mixing wings 21. In this embodiment, the gate device 31 is provided near a longitudinal central part 10c of the barrel 10.

Specifically, the gate device 31 is formed of a pair of upper and lower plate-like members. These plate-like members are so arranged as to surround intermediate parts of the screws 20 having a circular cross section, i.e. parts provided with no mixing wings, from upper and lower sides, and as to simultaneously vertically move in opposite directions. Movements of these plate-like members change the opening of the gate device 31, i.e. changes the flow path area for the polypropylene at the gate device 31 in the mixing extruder 1.

The butterfly valve 36 as the second flow path throttling mechanism is a valve adapted to operate so as to change the filling ratio of the polypropylene mixed by the second mixing wings located downstream of the gate device 31 and provided downstream of the second mixing wings 22. In other words, the butterfly valve 36 is arranged so as to make the second mixing wings 22 located between the gate device 31 and the butterfly valve 36 and, in this embodiment, arranged at a position downstream of the longitudinal central part 10c of the barrel 10, e.g. at a position near the leading-end discharge opening 10b and downstream of the screws 20. The butterfly valve 36 specifically includes a baffle rotatable about an axis perpendicular to a conveying direction of the polypropylene, and the rotation of this baffle changes the area of the polypropylene flow path in the mixing extruder 1. In short, the opening of the butterfly valve 36 is adjusted by the rotation of the baffle.

The opening of the butterfly valve 36 is changed in the following cases.

The opening of the butterfly valve 36 is changed when the temperature of the polypropylene mixed by the mixing wings at the most downstream, i.e. the second mixing wings 22 in this embodiment, is below a predetermined temperature (this is called "condition 1" below). Specifically, in the case of using peroxide having a half-life equal to or longer than 10 seconds at 200°C, the opening is changed so as to be narrowed when the temperature measured by the temperature sensor 37 is below 240°C. The position where the temperature is measured only has to be at the downstream side of the most downstream mixing wings, i.e. at the downstream side of the second mixing wings 22 in this embodiment; the position may be, for example, outside the leading-end discharge opening 10b. Throttling the butterfly valve 36 allows the temperature of the polypropylene mixed by the mixing wings 22 to reach a predetermined temperature (240°C). More specifically, the filling ratio of the polypropylene mixed by the mixing wings 22 located downstream of the gate device 31 (upstream of the butterfly valve 36) is increased, and the temperature of the polypropylene mixed by the second mixing wings 22 as the most downstream mixing wings in this embodiment becomes the predetermined temperature (240°C) or higher.

The opening of the butterfly valve 36 is changed so as to be narrowed also when a melt flow rate of the raw material polypropylene (polypropylene fed to the raw material feed hopper 11 before mixing) is a predetermined value or higher (this is called "condition 2" below), specifically when the melt flow rate is 7 (g/10 minutes) or higher. The filling rate and temperature of the polypropylene mixed by the second mixing wings 22 located downstream of the gate device 31 and upstream of the butterfly valve 36 is thereby increased.

The opening of the butterfly valve 36 may be narrowed when either one of the above "condition 1" and "condition 2" is satisfied or may be narrowed only when both "condition 1" and "condition 2" are satisfied.

In the mixing extruder 1, the length L of the screws 20, an adjustment range of the opening of the gate device 31 and that of the opening of the butterfly valve 36 are set so as to enable the total residence time of the polypropylene in the mixing extruder 1 to be adjusted to 15 seconds or longer. The total residence time of the polypropylene in the mixing extruder 1 can be extended by increasing the length L of the screws 20 or narrowing the opening of the gate device 31 or the butterfly valve 36.

Although this mixing extruder 1 is an apparatus for adjusting the viscosity of the polypropylene by mixing the polypropylene and the peroxide, it can be also assumed that the mixing extruder 1 operates with no supply of peroxide. For the latter operation, it is preferable that the mixed resin temperature, i.e. the temperature of the polypropylene to be mixed is low from the standpoint of saving energy and granulation performance at the downstream side. Therefore, it is desirable that the mixing extruder 1 is able to not only adjust the mixed resin temperature according to the viscosity of the polypropylene as the raw material resin, but also adjust the mixed resin temperature responsively to the supply or no supply of the peroxide.

As described above, just forming the screws 20 into shapes of strongly kneading to suppress a residual volume of the peroxide is not enough to adjust the mixed resin temperature adapted to supply or no supply of the peroxide. Also adjusting the rotational speed of the screws 20 to suppress the residual volume of the peroxide does not make it possible to adjust the mixed resin temperature responsively to supply or no supply of the peroxide, because the adjustable range of the rotational speed is narrow. Furthermore, making the barrel 10 and the screws 20 of the mixing extruder 1 longer or making the inner diameter D of the barrel 10 larger to suppress the residual volume of the peroxide results in an excessive high cost when the peroxide is not fed to the mixing extruder 1.

On the contrary, in the mixing extruder 1, increasing the openings of the gate device 31 and the butterfly valve 36 enables the mixing extruder 1 to prevent the mixed resin temperature from an excessive increase and be responsive to the case of no supply of peroxide. Furthermore, as described later, the mixing extruder 1 is not required to be longer and the inner diameter D of the barrel 10 is not required to be enlarged.

Next will be described Examples 1 to 5 in which the viscosity of a polypropylene was adjusted by use of the mixing extruder 1.

### (Example 1)

There was carried out an experiment for adjusting the viscosity of a polypropylene having a melt flow rate lower than 7 g/10 minutes, specifically a melt flow rate of 1 g/10 minutes by use of peroxide B having a half-life equal to or longer than 10 seconds at 200°C. The gate device 31 was close to the longitudinal central part 10c of the barrel 10 and the opening thereof was set at a minimum opening of 15 %. On the other hand, the butterfly valve 36 was fully opened, i.e. the opening thereof was set at 100 %.

Specifically, this embodiment was carried out on the following conditions:
1) Raw material resin: Polypropylene
2) Melt flow rate of the raw material resin: about 1 (g/10 minutes)
3) Peroxide B: about 950 ppm added
4) Treated amount: 428 kg/h
5) Barrel inner diameter D (bore of the mixing extruder 1): about 70 mm
6) L/D (ratio of screw length L to barrel inner diameter D): 30
7) Position of the first mixing wings: Upstream of the longitudinal central parts 20c of the screws 20

Table 1 shows a residual volume of the peroxide B in product resin pellets after the experiment. In this Table 1, "throttle 1 (intermediate)" indicates the gate device 31 as the first throttling mechanism and "throttle 2 (leading end)" indicates the butterfly valve 36 as the second throttling mechanism. The melt flow rate of the raw material resin can be measured based on a measurement method specified by JIS K7210 by use of a tester equivalent to the one specified by JIS K6760; however, in this Example, a value published by a material manufacturer is used as the melt flow rate of the raw material resin.

**Table 1**

| | Throttle 1 (Intermediate) Opening | Throttle 2 (Leading End) Opening | Discharged Resin Temperature (°C) | Peroxide Residual volume (ppm) |
|---|---|---|---|---|
| Example 1 | Fully Closed | Fully Open | 247 | 0.3 or less |

While, as described above, the peroxide residual volume is preferably 10 ppm or less, the peroxide residual volume in Example 1 was suppressed to an amount sufficiently less than 10 ppm (0.3 ppm or less). On the other hand, a discharged resin temperature, i.e. the temperature of the polypropylene mixed by the second mixing wings 22 as the most downstream mixing wings and located near the leading-end discharge opening 10b was 247°C higher than 240°C.

### (Examples 2 to 5)

There was carried out experiments for adjusting the viscosity of a polypropylene having a melt flow rate equal to or higher than 7 g/10 minutes, specifically a melt flow rate of 7 g/10 minutes by use of peroxide B having a half-life equal to or longer than 10 seconds at 200°C. In Examples 2 and 3 out of Examples 2 to 5, only the opening of the gate device 31 out of the gate device 31 and the butterfly valve 36 was adjusted while the butterfly valve 36 was kept fully open. In Examples 4 and 5, both the opening of the gate device 31 and that of the butterfly valve 36 were adjusted.

Specifically, these Examples were carried out on the following conditions:
Raw material resin: Polypropylene
Melt flow rate of the raw material resin: about 7 (g/10 minutes)
Peroxide B: about 450 ppm added
Treated amount: 428 kg/h
Barrel inner diameter D (extruder bore): about 70 mm
L/D (ratio of screw length L to barrel inner diameter D): 30
Position of the first mixing wings 21: Upstream of the longitudinal central parts 20c of the screws 20

**Table 2**

| | Throttle 1 (Intermediate) | | Throttle 2 (Leading End) | | Discharged Resin Temp (C°) | Residence Time (sec) | Peroxide Residual volume (ppm) |
|---|---|---|---|---|---|---|---|
| | Opening | Flow Path Area (%) | Opening | Flow Path Area (%) | | | |
| Exa. 2 | Fully Closed | 15 | Fully Open | 100 | 229 | 10 | 20 |
| Exa. 3 | Fully Closed | 15 | Fully Open | 100 | 229 | 10 | 24 |
| Exa. 4 | Fully Closed | 15 | Intermediate | 50 | 240 | 15 | 0.69 |
| Exa. 5 | Fully Closed | 15 | Fully Closed | 10 | 246 | 18 | 0.3 or less |

Table 2 shows the residual volumes of the peroxide B in product resin pellets after the experiments. As shown in this Table 2, the peroxide residual volume was 10 ppm or more and the discharged resin temperature was 229°C lower than 240°C according to Examples 2 and 3. This result teaches that, the mixing extruder including only the gate device 31 is capable of making the mixed resin temperature be an appropriate temperature when the raw material resin has a high viscosity as in Example 1, but is not capable of raising the mixed resin temperature to an appropriate temperature, i.e. a high temperature enough to allow the peroxide B to sufficiently react so as to reduce the residual volume of the peroxide B to below 10 ppm, when the raw material resin has a low viscosity as in Examples 2 and 3. Besides, it is inferred that the mixing extruder including only the butterfly valve 36 is not capable of increase the mixed resin temperature enough to allow the peroxide B to sufficiently react, because a product of the moving distance and temperature of the polypropylene (area S in FIG. 3 to be described later) therein is small as compared with the case where only the gate device 31 is included.

In Examples 4 and 5, the peroxide residual volume was suppressed to amounts (0.69 ppm and 0.3 ppm) sufficiently less than 10 ppm by narrowing the opening of the butterfly valve 36 in addition to that of the gate device 31, and the discharged resin temperature was 240°C or higher, specifically 240°C in Example 4 and 246°C in Example 5.

### (Features of the First Embodiment)

The mixing extruder 1 and the method for adjusting the viscosity of a polypropylene by use of the mixing extruder 1 according to this embodiment have the following features.

### (Feature 1)

In the above viscosity adjustment method, to mix the polypropylene and the peroxide, the filling ratio of the polypropylene mixed by the first mixing wings 21 at the most upstream side is increased by the gate device 31, whereby the temperature of the polypropylene mixed by the first mixing wings 21 at the most upstream side is increased as compared with the case where this filling ratio is not increased.

Furthermore, the butterfly valve 36 is capable of changing the filling ratio of the polypropylene mixed by the second mixing wings 22 downstream of the gate device 31, thereby increasing the temperature of the polypropylene mixed by the second mixing wings 22 located downstream of the gate device 31 as compared with the case where this filling ratio is not increased. This largely contributes to the effects of the present invention. Specifically, in the case where the peroxide B (see FIG.2) having a half-life equal to or longer than 10 seconds at 200°C is used and the temperature of the polypropylene mixed by the mixing wings at the most downstream side, i.e. the second mixing wings 22 in this embodiment is below the predetermined temperature (240°C), just increasing the filling ratio of the polypropylene only by the gate device 31 is not enough to prevent the residual volume of the peroxide B in the polypropylene discharged from the mixing extruder from becoming larger than the predetermined value (10 ppm); however, in such a case, increasing the filling ratio of the polypropylene by the butterfly valve 36 enables the temperature of the polypropylene mixed by the second mixing wings 22 as the mixing wings at the most downstream side to be increased to or above the predetermined temperature (240°C). This allows the polypropylene and the peroxide B to react more and the residual volume of the peroxide B having a half-life equal to or longer than 10 seconds at 200°C to be suppressed to or below the predetermined value (10 ppm).

Besides, according to the viscosity adjustment method in this mixing extruder 1, in the case that the temperature of the polypropylene mixed by the second mixing wings 22 at the most downstream side is equal to or above the predetermined temperature (240°C), what is required is only to increase the filling ratio and the temperature of the polypropylene by the gate device 31 and it is not required to increase the filling ratio and temperature by the butterfly valve 36; therefore this case allows the butterfly valve 36 to be, for example, fully opened. Thus, the viscosity adjustment method in this mixing extruder 1 can deal with treatments of polypropylenes having various melt flow rates.

Furthermore, the viscosity adjustment method in this mixing extruder 1, not requiring an increase in the length of the mixing extruder 1 (lengths of the barrel 10 and the screws 20) and the inner diameter D of the barrel 10, enables the residual volume of the peroxide B to be suppressed as described involving no considerable enlargement of the mixing extruder 1.

### (Feature 2)

In the case where the peroxide B (see FIG. 2) having a half-life equal to or longer than 10 seconds at 200°C is used and the melt flow rate of the polypropylene as the raw material is 7 (g/10 minutes) or higher, just increasing the filling ratio of the polypropylene only by the gate device 31 is not enough to prevent the residual volume of the peroxide B in the polypropylene discharged from the mixing extruder 1 from becoming larger than the predetermined value (10 ppm); in such a case, according to the viscosity adjustment method in this mixing extruder 1, the filling ratio of the polypropylene is increased by the butterfly valve 36. This increases the temperature of the polypropylene mixed by the mixing wings 22 located downstream of the gate device 31. This allows the polypropylene and the peroxide B toreact more. Therefore, it is possible to suppress the residual volume of the peroxide B having a half-life equal to or longer than 10 seconds at 200°C to or below the predetermined value (10 ppm).

Besides, according to the viscosity adjustment method in this mixing extruder 1, in the case that the melt flow rate of the polypropylene as the raw material is below 7 (g/10 minutes), what is required is only to increase the filling ratio and the temperature of the polypropylene by the gate device 31 and it is not required to increase the filling ratio and temperature by the butterfly valve 36; therefore this case allows the butterfly valve 36 to be, for example, fully opened. Thus, the viscosity adjustment method in this mixing extruder 1 can deal with treatments of polypropylenes having various melt flow rates.

### (Feature 3)

In the viscosity adjustment method in this mixing extruder 1, under the condition of increasing the filling ratio of the polypropylene upstream of the longitudinal central parts 20c of the screws 20 in the barrel 10, the polypropylene having the thus increased filling ratio is mixed by the first mixing wings 21 at the most upstream side. Hence, as compared with the case where the filling ratio of the polypropylene is increased only at the downstream side of the longitudinal central parts 20c of the screws 20, the temperature of the polypropylene can be increased earlier at a more upstream side. This extends the residence time of the polypropylene having the increased temperature in the mixing extruder 1 to increase a product of the temperature and the residence time of the polypropylene, thereby allowing the polypropylene and the peroxide to react more, which results in enabling the residual volume of the peroxide B to be suppressed more.

This feature is further described with reference to FIG. 3. FIG. 3 shows a relationship between axial-direction position of the mixing extruder 1 shown in FIG. 1 and the temperature of the resin, i.e. the polypropylene. FIG. 3 has a broken line T1 which indicates a resin temperature distribution when the gate device 31 and the butterfly valve 36 are not present or the flow path is not throttled and a solid line T2 which indicates a resin temperature distribution when the flow path is throttled by the gate device 31 and the butterfly valve 36. In the case of throttling the flow path, the product of the moving distance and temperature of the polypropylene is larger by an area S than that in the case of no throttling the flow path; therefore, if the moving speed of the polypropylene is constant, the residence time becomes longer as the moving distance becomes longer. Accordingly, the larger the area S, the more the reaction of the peroxide B. Besides, if the temperature of the polypropylene at the leading-end discharge opening 10b of the mixing extruder 1 is constant, i.e. if the discharged resin temperature is fixed at a temperature T3 of FIG. 3, the area S is increased as the position where the temperature of the polypropylene is more upstream, i.e. closer to the raw material feed opening 10a. In consideration with this, as to the mixing extruder 1, increase the filling ratio and temperature of the polypropylene upstream of the longitudinal central parts 20c of the screws 20 in the barrel 10 as shown in FIG. 1 enables the peroxide to react more effectively than merely increasing the discharged resin temperature T3 (see FIG. 3).

### (Feature 4)

The first mixing wings 21 at the most upstream side of the mixing extruder 1, being provided upstream of the longitudinal central parts 20c of the screws 20 in the barrel 10, increases the temperature of the polypropylene by the first mixing wings 21 earlier to extend the residence time of the polypropylene in the mixing extruder 1 in this state, as described in (Feature 3), thereby further suppressing the residual volume of the peroxide B.

Besides, since the butterfly valve 36 can increase the filling ratio and temperature of the polypropylene mixed by the second mixing wings 22 located downstream of the gate device 31, even in the case of treating a polypropylene having a melt flow rate at which the residual volume of the peroxide B cannot be suppressed to or below the predetermined value (10 ppm) only by the gate device 31, the residual volume of the peroxide B can be more suppressed by increasing the filling ratio and temperature of the polypropylene by the butterfly valve 36. On the other hand, in the case of treating a polypropylene having a melt flow rate at which the residual volume of the peroxide B can be suppressed to or below the predetermined value (10 ppm) only by the gate device 31, that is, in the case of no requirement of increasing the filling ratio and temperature of the polypropylene by the butterfly valve 36, the butterfly valve 36 may be, for example, fully opened. Thus, treatments of polypropylenes having various melt flow rates can be performed by only the single mixing extruder 1.

### (Feature 5)

The gate device 31 of this mixing extruder 1 is able to narrow the opening of the flow path for the polypropylene to 20 % or below of the opening when the gate device 31 is fully open. This expands adjustable ranges of the filling ratio and temperature of the polypropylene mixed by the first mixing wings 21 at the most upstream side, thus expanding a range of the melt flow rate of mixable polypropylenes.

### (Feature 6)

In the mixing extruder 1, setting the length L of the screws 20 arranged in the barrel 10 having the inner diameter D so as to satisfy L/D ≥ 30 makes it possible to obtain an sufficiently long total residence time of the polypropylene in the mixing extruder 1 as compared with the case where L/D is below 30. This allows even peroxide B having a long half-life to react with the polypropylene. Accordingly, combination of setting L/D as described above and the flow path throttling mechanisms (gate device 31, butterfly valve 36) makes it possible to provide a mixing extruder capable of effectively suppressing a residual volume of even peroxide having a long half-life.

### (Feature 7)

In the above mixing extruder 1, the length L of the screws 20, the adjustment range for the opening of the gate device 31 and that for the opening of the butterfly valve 36 are so set that the total residence time of the polypropylene in the mixing extruder 1 is adjustable to 15 seconds or longer. This enables a sufficiently long total residence time to be set, thus making it possible to effectively suppress the residual volume of even the peroxide B having a long half-life.

### (Second Embodiment)

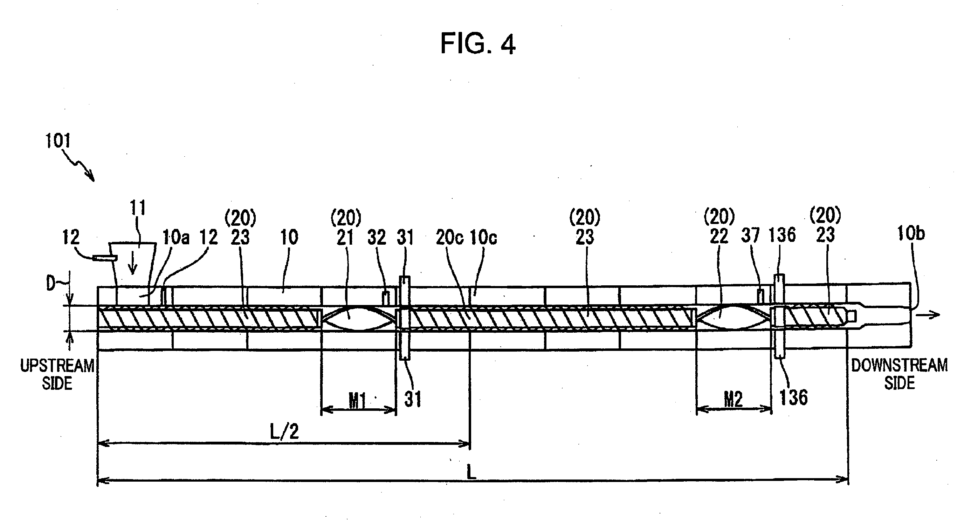

FIG. 4 shows a mixing extruder 101 according to a second embodiment of the present invention. This mixing extruder 101 includes a gate device 136 shown in FIG. 4 as a second throttling mechanism instead of the butterfly valve 36 shown in FIG. 1. The gate device 136 is opened and closed on the same conditions as the above butterfly valve 36. The gate device 136 includes a pair of upper and lower plate-like members similar to the gate device 31, these plate-like members being arranged so as to surround intermediate parts of screws 20 having a circular cross section from upper and lower sides, for example, near a leading-end discharge opening 10b of a barrel 10. The gate device 136 only has to be located at a downstream side of second mixing wings 22 located downstream of the gate device 31 and is arranged, for example, adjacent to the mixing wings 22.

### (Number and Positions of Kneading Wings)

In the present invention, each screw may include three or more mixing wings. While, in the first and second embodiments, the second mixing wings in relation to which the filling ratio of the polypropylene can be changed by the second flow path throttling mechanism, i.e. by the butterfly valve 36 shown in FIG. 1 or the gate device 136 shown in FIG. 4 and which are located downstream of the gate device 31 as the first flow path throttling mechanism corresponds to the mixing wings at the most downstream side, in the case of the screws 20 each including three or more mixing wings, the "mixing wings located immediately downstream of the first flow path throttling mechanism" and the "mixing wings at the most downstream side" may differ. For example, there may be provided additional mixing wings other than the second mixing wings between the gate device 31 shown in FIGS. 1 and 4 and the second mixing wings 22. Besides, there may be provided "mixing wings at the most downstream side" other than the second mixing wings 22, for example, downstream of the gate device 136 shown in FIG. 4.

### (Operation of the Second Flow Channel Throttling Mechanism)

The conditions for operating the second flow path throttling mechanism according to the present invention, e.g. the butterfly valve 36 shown in FIG. 1 or the gate device 136 shown in FIG. 4 can be arbitrarily set. Specifically, while, in the first embodiment, both of the condition 1 that the temperature of the polypropylene mixed by the second mixing wings 22 is below 240°C and the condition 2 that the melt flow rate of the raw material polypropylene is 7 (g/10 minutes) or higher are set as the conditions on which the opening of the butterfly valve 36 is narrowed, a specific value of the temperature or melt flow rate as a basis for judgment as to whether or not the flow path should be throttled can be arbitrarily changed according to a targeted residual volume (e.g. 10 ppm or less) of the peroxide.

### (Outline of the Present Invention)

As described above, the present invention provides: a method for adjusting the viscosity of a polypropylene which method is capable of treating polypropylenes having various melt flow rate by use of peroxide without considerably enlarging the mixing extruder and suppressing the residual volume of the peroxide even if the peroxide has a half-life equal to or longer than 10 seconds at 200°C; and a mixing extruder suitable for the method.

The present invention provides a first viscosity adjustment method, which includes: preparing a mixing extruder including a barrel, a screw rotatably arranged in the barrel and having a plurality of mixing wings including a first mixing wing located at a most upstream side and a second mixing wing located downstream of the first mixing wing, peroxide feeder for feeding peroxide at a position upstream of the first mixing wing, a first flow path throttling mechanism capable of changing an area of a flow path for the polypropylene at a side downstream of the first mixing wing and upstream of the second mixing wing to thereby change a filling ratio of a polypropylene mixed by the first mixing wing, and a second flow path throttling mechanism capable of changing the area of the flow path for the polypropylene at the downstream side of the second mixing wing to thereby change a filling ratio of the polypropylene mixed by the second mixing wing; and mixing of the polypropylene and peroxide having a half-life equal to or longer than 10 seconds at 200°C using this mixing extruder, wherein, in the mixing, the flow path for the polypropylene located downstream of the first mixing wing is throttled by the first flow path throttling mechanism to thereby increase the filling ratio of the polypropylene at the first mixing wing; and, when the temperature of the polypropylene mixed by the most downstream one of the mixing wings is below a predetermined temperature, the flow path for the polypropylene located downstream of the second mixing wing is throttled by the second flow path throttling mechanism to increase the filling ratio of the polypropylene at the second mixing wing, thereby bringing the polypropylene mixed by the mixing wing at the most downstream side to or above the predetermined temperature.

The viscosity adjustment method in the mixing extruder includes increasing the filling ratio of the polypropylene mixed by the first mixing wing at the most upstream side by the first flow path throttling mechanism, for mixing the polypropylene and the peroxide, thereby enabling the temperature of the polypropylene mixed by the first mixing wing to be higher than the case where this filling ratio is not increased.

Furthermore, the second flow path throttling mechanism is able to change the filling ratio of the polypropylene mixed by the second mixing wing located downstream of the first flow path throttling mechanism, thereby enabling the temperature of the polypropylene mixed by the mixing wing located downstream of the first flow path throttling mechanism to be higher than the case where this filling ratio is not increased. This largely contributes to the accomplishment of the object of the present invention. Specifically, when peroxide having a half-life equal to or longer than 10 seconds at 200°C is used and the temperature of the polypropylene mixed by the mixing wing at the most downstream side is below the predetermined temperature, just increasing the filling ratio of the polypropylene at the first mixing wing by the first flow path throttling mechanism may be not enough to prevent the residual volume of the peroxide in the polypropylene discharged from the mixing extruder from being larger than a predetermined value; however, in the present invention, increasing the filling ratio of the polypropylene, in this case, by the second flow path throttling mechanism to increase the temperature of the polypropylene mixed by the mixing wing at the most downstream side to or above the predetermined temperature allows the polypropylene and the peroxide to react more. This enables the residual volume of the peroxide having the half-life equal to or longer than 10 seconds at 200°C to be suppressed to or below the predetermined value.

Moreover, according to this first viscosity adjustment method, when the temperature of the polypropylene mixed by the mixing wing at the most downstream side is equal to or above the predetermined temperature, only the first flow path throttling mechanism has to increase the filling ratio and temperature of the polypropylene while the second flow path throttling mechanism does not have to. Thus, the viscosity adjustment method in this mixing extruder can deal with treatments of polypropylenes having various melt flow rates.

Besides, the viscosity adjustment method in this mixing extruder has no requirement of increasing either the length of the mixing extruder or the inner diameter of the barrel, thus making it possible to suppress the residual volume of the peroxide not involving a considerable enlargement of the mixing extruder.

The present invention provides a second viscosity adjustment method which includes: preparing a mixing extruder including a barrel, a screw rotatably arranged in the barrel and having a plurality of mixing wings including a first mixing wing located at a most upstream side and a second mixing wing located downstream of the first mixing wing, peroxide feeder for feeding peroxide at a position upstream of the first mixing wing, a first flow path throttling mechanism capable of changing an area of a flow path for the polypropylene at a side downstream of the first mixing wing and upstream of the second mixing wing to thereby change a filling ratio of a polypropylene mixed by the first mixing wing, a second flow path throttling mechanism capable of changing the area of the flow path for the polypropylene at the downstream side of the second mixing wing to thereby change a filling ratio of the polypropylene mixed by the second mixing wing by; and mixing of the polypropylene and peroxide having a half-life equal to or longer than 10 seconds at 200°C using this mixing extruder, wherein, in the mixing, the flow path for the polypropylene located downstream of the first mixing wing is throttled by the first flow path throttling mechanism to increase the filling ratio of the polypropylene at the first mixing wing; and, when a melt flow rate of the polypropylene as a raw material is 7 (g/10 minutes) or higher, the flow path for the polypropylene located downstream of the second mixing wing is throttled by the second flow path throttling mechanism to increase the filling ratio of the polypropylene at the second mixing wing.

In this second viscosity adjustment method, similar to the first method, the first flow path throttling mechanism is able to increase the filling ratio and temperature of the polypropylene mixed by the first mixing wing at the most upstream side and the second flow path throttling mechanism is able to increase the filling ratio and temperature of the polypropylene mixed by the second mixing wing located downstream of the first flow path throttling mechanism. This largely contributes to the accomplishment of the object of the present invention. Specifically, when peroxide having a half-life equal to or longer than 10 seconds at 200°C is used and the melt flow rate of the polypropylene as the raw material is 7 (g/10 minutes) or higher, just increasing the filling ratio of the polypropylene at the first mixing wing by the first flow path throttling mechanism may be not enough to prevent the residual volume of the peroxide in the polypropylene discharged from the mixing extruder from being larger than a predetermined value; however, in the present invention, increasing the filling ratio of the polypropylene in this case by the second flow path throttling mechanism to bring the temperature of the polypropylene mixed by the mixing wing at the most downstream side to or above the predetermined temperature allows the polypropylene and the peroxide to react more. This enables the residual volume of the peroxide having the half-life equal to or longer than 10 seconds at 200°C to be suppressed to or below the predetermined value.

Furthermore, according to this second viscosity adjustment method, when the melt flow rate of the polypropylene as the raw material is below 7 (g/10 minutes), only the first flow path throttling mechanism has to increase the filling ratio and temperature of the polypropylene while the second flow path throttling mechanism does not have to. Thus, the viscosity adjustment method in this mixing extruder can deal with treatments of polypropylenes having various melt flow rates.

Besides, this second viscosity adjustment method does not require considerable enlargement of the mixing extruder similar to the first method.

In the first and second viscosity adjustment methods, it is preferable that, under the condition of increasing the filling ratio of the polypropylene upstream of a longitudinal central part of the screw in the barrel of the mixing extruder by the first flow path throttling mechanism, the polypropylene having the thus increased filling ratio is mixed by the first mixing wing. This enables the temperature of the polypropylene to be earlier increased at a more upstream side than the case where the filling ratio of the polypropylene is increased only at the downstream side of the longitudinal central part of the screw, thus making it possible to extend a residence time of the polypropylene having the thus increased temperature in the mixing extruder, that is, making it possible to increase a product of the temperature and residence time of the polypropylene. The polypropylene and the peroxide is therefore allowed to react more, resulting in further suppressing the residual volume of the peroxide.

The present invention also provides a mixing extruder for adjusting the viscosity of a polypropylene by mixing the polypropylene and peroxide. This mixing extruder comprises: a barrel; a screw rotatably arranged in the barrel and having a plurality of screws including a first mixing wing located at a most upstream side and a second mixing wing located downstream of the first mixing wing, the first mixing wing being located upstream of a longitudinal central part of the screw in the barrel; peroxide feeder for feeding the peroxide at a position upstream of the first mixing wing; a first flow path throttling mechanism located downstream of the first mixing wing and upstream of the second mixing wing and adapted to throttle a flow path for the polypropylene to thereby change a filling ratio of the polypropylene mixed by the first mixing wing; and a second flow path throttling mechanism located downstream of the second mixing wing and adapted to throttle the flow path for the polypropylene to thereby change a filling ratio of the polypropylene mixed by the second mixing wing.

The first flow path throttling mechanism of this mixing extruder is able to increase the filling ratio and temperature of the polypropylene mixed by the first mixing wing at the most upstream side. The first mixing wing, being provided upstream of the longitudinal central part of the screw in the barrel, is able to raise the temperature of the polypropylene earlier to extend a residence time of the polypropylene in the mixing extruder in this state, thereby suppressing the residual volume of the peroxide.

Besides, the second flow path throttling mechanism is able to increase the filling ratio and temperature of the polypropylene mixed by the second mixing wing located downstream of the first flow path throttling mechanism. Accordingly, even in the case of treating a polypropylene having a melt flow rate at which the residual volume of peroxide cannot be suppressed to or below a predetermined value only by the first flow path throttling mechanism, the residual volume of the peroxide can be suppressed by increasing the filling ratio and temperature of the polypropylene by the second flow path throttling mechanism. On the contrary, in the case of treating a polypropylene having a melt flow rate at which the residual volume of peroxide can be suppressed to or below a predetermined value only by the first flow path throttling mechanism, i.e. when there is no necessity of increasing the filling ratio and temperature of the polypropylene by the second flow path throttling mechanism, the opening of the second flow path throttling mechanism can be preferably increased to reduce flow path resistance. Thus, treatments of polypropylenes having various melt flow rates can be carried out by only the single mixing extruder. Furthermore, this mixing extruder can obtain the above effects with no considerable enlargement thereof.

It is preferable that the first flow path throttling mechanism is adapted to narrow an area of the flow path for the polypropylene so as to reduce the area to or below 20 % of the area when the first flow path throttling mechanism is fully opened. The first flow path throttling mechanism having such a large area changing range is able to change the filling ratio and temperature of the polypropylene mixed by the first mixing wing at the most upstream side in large ranges, thus allowing a melt flow rate range of polypropylenes which can be dealt with (can be mixed) to be widened.

In the above mixing extruder, it is desirable that the screw arranged in the barrel has a length L satisfying L/D ≥ 30 when D denotes the inner diameter of the barrel. The mixing extruder comprising the screw having such a length L sufficiently extends a total residence time of the polypropylene in the mixing extruder, thus allowing even peroxide having a long half-time to react more with the polypropylene. Hence, the combination of the first and second flow path throttling mechanisms of the mixing extruder enables a mixing state of the mixing extruder to be adjusted so as to reduce a residual volume of even peroxide having a long half-life.

Furthermore, in this mixing extruder, the length of the screw, an adjustment range for the opening of the first throttling mechanism and an adjustment range for the opening of the second throttling mechanism are preferably so set that the total residence time of the polypropylene in the mixing extruder is adjustable to 15 seconds or longer. This mixing extruder can sufficiently extend the total residence time of the polypropylene in the mixing extruder and effectively suppress the residual volume of even peroxide having a long half-life.

## Claims

1. A method for adjusting the viscosity of a polypropylene by mixing the polypropylene and peroxide, comprising:
preparing a mixing extruder (1) including a barrel (10), a screw (20) rotatably arranged in the barrel (10) and having a plurality of mixing wings including a first mixing wing (21) located at a most upstream side and a second mixing wing (22) located downstream of the first mixing wing (21), peroxide feeder (12) for feeding peroxide at a position upstream of the first mixing wing (21), a first flow path throttling mechanism (31) capable of changing an area of a flow path for the polypropylene at a side downstream of the first mixing wing (21) and upstream of the second mixing wing (22) to thereby change a filling ratio of a polypropylene mixed by the first mixing wing (21), and a second flow path throttling mechanism (36) capable of changing the area of the flow path for the polypropylene at the downstream side of the second mixing wing (22) to thereby change a filling ratio of the polypropylene mixed by the second mixing wing (22); and
mixing of the polypropylene and peroxide having a half-life equal to or longer than 10 seconds at 200°C using this mixing extruder (1),
wherein, in the mixing, the flow path for the polypropylene located downstream of the first mixing wing (21) is throttled by the first flow path throttling mechanism (31) to thereby increase the filling ratio of the polypropylene at the first mixing wing (21); and, when the temperature of the polypropylene mixed by the most downstream one of the mixing wings (21, 22) is below a predetermined temperature, the flow path for the polypropylene located downstream of the second mixing wing (22) is throttled by the second flow path throttling mechanism (36) to increase the filling ratio of the polypropylene at the second mixing wing (22), thereby bringing the polypropylene mixed by the mixing wing at the most downstream side to or above the predetermined temperature.

2. A method according to claim 1, wherein:
a filling ratio of the polypropylene at an upstream side of a longitudinal central part (20c) of the screw (20) in the barrel (10) of the mixing extruder (1) is increased by the first flow path throttling mechanism (31), and the polypropylene having the increased filling ratio is mixed by the first mixing wing (21).

3. A method for adjusting the viscosity of a polypropylene by mixing the polypropylene and peroxide, comprising:
preparing a mixing extruder including a barrel (10), a screw (20) rotatably arranged in the barrel (10) and having a plurality of mixing wings including a first mixing wing (21) located at a most upstream side and a second mixing wing (22) located downstream of the first mixing wing (21), peroxide feeder (12) for feeding peroxide at a position upstream of the first mixing wing (21), a first flow path throttling mechanism (31) capable of changing an area of a flow path for the polypropylene at a side downstream of the first mixing wing (21) and upstream of the second mixing wing (22) to thereby change a filling ratio of a polypropylene mixed by the first mixing wing (21), and a second flow path throttling mechanism (36) capable of changing the area of the flow path for the polypropylene at the downstream side of the second mixing wing (22) to thereby change a filling ratio of the polypropylene mixed by the second mixing wing (22); and
mixing of the polypropylene and peroxide having a half-life equal to or longer than 10 seconds at 200°C using this mixing extruder,
wherein, in the mixing, the flow path for the polypropylene located downstream of the first mixing wing (21) is throttled by the first flow path throttling mechanism (31) to increase the filling ratio of the polypropylene at the first mixing wing (21); and, when a melt flow rate of the polypropylene as a raw material is 7 (g/10 minutes) or higher, the flow path for the polypropylene located downstream of the second mixing wing (22) is throttled by the second flow path throttling mechanism (36) to increase the filling ratio of the polypropylene at the second mixing wing (22).

4. A method according to claim 3, wherein:
a filling ratio of the polypropylene at an upstream side of a longitudinal central part (20c) of the screw (20) in the barrel (10) of the mixing extruder (1) is increased by the first flow path throttling mechanism (31), and the polypropylene having the increased filling ratio is mixed by the first mixing wing (21).

5. A mixing extruder (1) for adjusting the viscosity of a polypropylene by mixing the polypropylene and peroxide, comprising:
a barrel (10);
a screw (20) rotatably arranged in the barrel (10); and
peroxide feeder (12) for feeding the peroxide at a position upstream of the first mixing wing (21), **characterized in that**
the screw (20) has a plurality of mixing wings including a first mixing wing (21) located at a most upstream side and a second mixing wing (22) located downstream of the first mixing wing (21), the first mixing wing (21) being located upstream of a longitudinal central part (20c) of the screw (20) in the barrel (10); wherein the mixing extruder further comprises
a first flow path throttling mechanism (31) located downstream of the first mixing wing (21) and upstream of the second mixing wing (22) and adapted to throttle a flow path for the polypropylene to thereby change a filling ratio of the polypropylene mixed by the first mixing wing (21); and
a second flow path throttling mechanism (36) located downstream of the second mixing wing (21) and adapted to throttle the flow path for the polypropylene to thereby change a filling ratio of the polypropylene mixed by the second mixing wing (21).

6. A mixing extruder according to claim 5, wherein
the first flow path throttling mechanism (31) is adapted to narrow an area of the flow path for the polypropylene so as to reduce the area to or below 20 % of an area when the first flow path throttling mechanism (31) is fully opened.

7. A mixing extruder (1) according to claim 5, wherein a length L of the screw (20) arranged in the barrel (10) is set to satisfy L/D ≥ 30 when D denotes the inner diameter of the barrel (10).

8. A mixing extruder (1) according to claim 5, wherein the length of the screw (20), an adjustment range for the opening of the first throttling mechanism (31) and an adjustment for the opening of the second throttling mechanism (36) are so set that a total residence time of the polypropylene in the mixing extruder (1) is adjustable to 15 seconds or longer.

## Patentansprüche

1. Verfahren zum Einstellen der Viskosität eines Polypropylens durch Mischen des Polypropylens und Peroxid, mit:
Bereitstellen eines Mischextruders (1), der eine Trommel (10), eine Schraube (20), die in der Trommel (10) drehbar angeordnet ist und eine Vielzahl von Mischflügeln hat, die einen ersten Mischflügel (21), der sich an einer am weitesten stromaufwärts liegenden Seite befindet, und einen zweiten Mischflügel (22) aufweist, der sich stromabwärts des ersten Mischflügels (21) befindet, eine Peroxidspeiseeinrichtung (12) zum Speisen von Peroxid an einer Position stromaufwärts des ersten Mischflügels (21), einen ersten Strömungswegdrosselmechanismus (31), der in der Lage ist, einen Bereich eines Strömungswegs für das Polypropylen an einer Seite stromabwärts des ersten Mischflügels (21) und stromaufwärts des zweiten Mischflügels (22) zu ändern, um dadurch einen Befüllungsanteil eines durch den ersten Mischflügel (21) gemischten Polypropylens zu ändern, und einen zweiten Strömungswegdrosselmechanismus (36) aufweist, der in der Lage ist, den Bereich des Strömungswegs für das Polypropylen an der stromabwärtigen Seite des zweiten Mischflügels (22) zu ändern, um dadurch einen Befüllungsanteil des durch den zweiten Mischflügel (22) gemischten Polypropylens zu ändern; und
Mischen des Polypropylens und Peroxids, die eine Halbwertszeit von 10 Sekunden bei 200 °C oder länger haben, unter Verwendung dieses Mischextruders (1),
wobei beim Mischen der Strömungsweg für das sich stromabwärts des ersten Mischflügels (21) befindlichen Propylens durch den ersten Strömungswegdrosselmechanismus (31) gedrosselt wird, um dadurch den Befüllungsanteil des Polypropylens an dem ersten Mischflügel (21) zu erhöhen, und wenn die Temperatur des durch den **am weitesten** stromabwärts liegenden Einen der Mischflügel (21, 22) gemischten Polypropylens unter einer vorbestimmten Temperatur liegt, der Strömungsweg für das sich stromabwärts des zweiten Mischflügels (22) befindlichen Polypropylens durch den zweiten Strömungswegdrosselmechanismus (36) gedrosselt wird, um den Befüllungsanteil des Polypropylens an dem zweiten Mischflügel (22) zu erhöhen, um dadurch das durch den Mischflügel an der am weitesten stromabwärts liegenden Seite gemischten Polypropylens auf oder über die vorbestimmte Temperatur zu bringen.

2. Verfahren gemäß Anspruch 1, wobei
ein Befüllungsanteil des Polypropylens an einer stromaufwärtigen Seite eines in Längsrichtung mittleren Teils (20c) der Schraube (20) in der Trommel (10) des Mischextruders (1) durch den ersten Strömungswegdrosselmechanismus (31) erhöht wird, und das Polypropylen, das den erhöhten Befüllungsanteil hat, durch den ersten Mischflügel (21) gemischt wird.

3. Verfahren zum Einstellen der Viskosität eines Polypropylens durch Mischen des Polypropylens und Peroxid, mit:
Bereitstellen eines Mischextruders (1), der eine Trommel (10), eine Schraube (20), die in der Trommel (10) drehbar angeordnet ist und eine Vielzahl von Mischflügeln hat, die einen ersten Mischflügel (21), der sich an einer am weitesten stromaufwärts liegenden Seite befindet, und einen zweiten Mischflügel (22) aufweist, der sich stromabwärts des ersten Mischflügels (21) befindet, eine Peroxidspeiseeinrichtung (12) zum Speisen von Peroxid an einer Position stromaufwärts des ersten Mischflügels (21), einen ersten Strömungswegdrosselmechanismus (31), der in der Lage ist, einen Bereich eines Strömungswegs für das Polypropylen an einer Seite stromabwärts des ersten Mischflügels (21) und stromaufwärts des zweiten Mischflügels (22) zu ändern, um dadurch einen Befüllungsanteil eines durch den ersten Mischflügel (21) gemischten Polypropylens zu ändern, und einen zweiten Strömungswegdrosselmechanismus (36) aufweist, der in der Lage ist, den Bereich des Strömungswegs für das Polypropylen an der stromabwärtigen Seite des zweiten Mischflügels (22) zu ändern, um dadurch einen Befüllungsanteil des durch den zweiten Mischflügel (22) gemischten Polypropylens zu ändern; und
Mischen des Polypropylens und Peroxids, die eine Halbwertszeit von 10 Sekunden bei 200 °C oder länger haben, unter Verwendung dieses Mischextruders,
wobei beim Mischen der Strömungsweg für das sich stromabwärts des ersten Mischflügels (21) befindlichen Polypropylen durch den ersten Strömungswegdrosselmechanismus (31) gedrosselt wird, um den Befüllungsanteil des Polypropylens an dem ersten Mischflügel (21) zu erhöhen, und wobei dann, wenn eine Schmelzströmungsrate des Polypropylens als ein Rohmaterial 7 (g/10 Minuten) oder höher beträgt, der Strömungsweg für das sich stromabwärts des zweiten Mischflügels (22) befindliche Polypropylen durch den zweiten Strömungswegdrosselmechanismus (36) gedrosselt wird, um den Befüllungsanteil des Polypropylens an dem zweiten Mischflügel (22) zu erhöhen.

4. Verfahren gemäß Anspruch 3, wobei
ein Befüllungsanteil des Polypropylens an einer stromaufwärtigen Seite eines in Längsrichtung mittleren Teils (20c) der Schraube (20) in der Trommel (10) des Mischextruders (1) durch den ersten Strömungswegdrosselmechanismus (31) erhöht wird, und das Polypropylen, das den erhöhten Befüllungsanteil hat, von dem ersten Mischflügel (21) gemischt wird.

5. Mischextruder (1) zum Einstellen der Viskosität eines Polypropylens durch Mischen des Polypropylens und Peroxid, mit:
einer Trommel (10);
einer Schraube (20), die in der Trommel (10) drehbar angeordnet ist; und
einem Peroxidspeiser (12) zum Speisen des Peroxids an einer Stelle stromaufwärts des ersten Mischflügels (21), **dadurch gekennzeichnet, dass**
die Schraube (20) eine Vielzahl von Mischflügeln einschließlich eines ersten Mischflügels (21), der sich an einer am weitesten stromaufwärts liegenden Seite befindet, und eines zweiten Mischflügels (22), der sich stromabwärts des ersten Mischflügels (21) befindet, hat, wobei der erste Mischflügel (21) stromaufwärts eines in Längsrichtung mittleren Teils (20c) der Schraube (20) in der Trommel (10) befindet, wobei der Mischextruder ferner Folgendes aufweist:
einen ersten Strömungswegdrosselmechanismus (31), der sich stromabwärts des ersten Mischflügels (21) und stromaufwärts des zweiten Mischflügels (22) befindet und der dazu angepasst ist, einen Strömungsweg für das Polypropylen zu drosseln, um dadurch einen Befüllungsanteil des durch den ersten Mischflügel (21) gemischten Polypropylens zu ändern; und
einen zweiten Strömungswegdrosselmechanismus (36), der sich stromabwärts des zweiten Mischflügels (21) befindet und dazu angepasst ist, den Strömungsweg für das Polypropylen zu drosseln, um dadurch einen Befüllungsanteil des durch den zweiten Mischflügel (21) gemischten Polypropylens zu ändern.

6. Mischextruder gemäß Anspruch 5, wobei
der erste Strömungswegdrosselmechanismus (31) dazu angepasst ist, einen Bereich des Strömungswegs für das Polypropylen einzuengen, um den Bereich auf oder unter 20% eines Bereichs zu verringern, wenn der erste Strömungswegdrosselmechanismus (31) vollständig geöffnet ist.

7. Mischextruder (1) gemäß Anspruch 5, wobei eine Länge L der in der Trommel (10) angeordneten Schraube (20) so festgelegt ist, dass sie L/D ≥ 30 erfüllt, wenn D den Innendurchmesser der Trommel (10) bezeichnet.

8. Mischextruder (1) gemäß Anspruch 5, wobei die Länge der Schraube (20), ein Einstellungsbereich für das Öffnen des ersten Drosselmechanismus (31) und ein Einstellungsbereich für das Öffnen des zweiten Drosselmechanismus (36) so festgelegt sind, dass die gesamte Aufenthaltszeit des Polypropylens in dem Mischextruder (1) auf 15 Sekunden oder länger einstellbar ist.

## Revendications

1. Procédé destiné à ajuster la viscosité d'un polypropylène en mélangeant le polypropylène et du peroxyde, comprenant le fait :
de préparer une extrudeuse-mélangeuse (1) comportant un cylindre (10), une vis (20) agencée en rotation dans le cylindre (10) et ayant une pluralité d'ailes de mélange comportant une première aile de mélange (21) située au niveau du côté le plus en amont et une deuxième aile de mélange (22) située en aval de la première aile de mélange (21), un dispositif d'alimentation en peroxyde (12) pour effectuer une alimentation en peroxyde à une position en amont de la première aile de mélange (21), un premier mécanisme d'étranglement de chemin d'écoulement (31) capable de modifier une superficie d'un chemin d'écoulement pour le polypropylène au niveau d'un côté en aval de la première aile de mélange (21) et en amont de la deuxième aile de mélange (22) pour modifier ainsi un taux de remplissage d'un polypropylène mélangé par la première aile de mélange (21), et un deuxième mécanisme d'étranglement de chemin d'écoulement (36) capable de modifier la superficie du chemin d'écoulement pour le polypropylène au niveau du côté aval de la deuxième aile de mélange (22) pour modifier ainsi un taux de remplissage du polypropylène mélangé par la deuxième aile de mélange (22) ; et
de mélanger le polypropylène et du peroxyde ayant une demi-vie supérieure ou égale à 10 secondes à 200°C en utilisant cette extrudeuse-mélangeuse (1),
dans lequel, au cours du mélange, le chemin d'écoulement pour le polypropylène situé en aval de la première aile de mélange (21) est étranglé par le premier mécanisme d'étranglement de chemin d'écoulement (31) pour augmenter ainsi le taux de remplissage du polypropylène au niveau de la première aile de mélange (21) ; et, lorsque la température du polypropylène mélangé par l'aile la plus en aval des ailes de mélange (21, 22) est inférieure à une température prédéterminée, le chemin d'écoulement pour le polypropylène situé en aval de la deuxième aile de mélange (22) est étranglé par le deuxième mécanisme d'étranglement de chemin d'écoulement (36) pour augmenter le taux de remplissage du polypropylène au niveau de la deuxième aile de mélange (22), amenant ainsi le polypropylène mélangé par l'aile de mélange au niveau du côté le plus en aval à la température prédéterminée ou au-dessus de celle-ci.

2. Procédé selon la revendication 1, dans lequel :
un taux de remplissage du polypropylène au niveau d'un côté amont d'une partie centrale longitudinale (20c) de la vis (20) dans le cylindre (10) de l'extrudeuse-mélangeuse (1) est augmenté par le premier mécanisme d'étranglement de chemin d'écoulement (31), et le polypropylène ayant le taux de remplissage augmenté est mélangé par la première aile de mélange (21).

3. Procédé destiné à ajuster la viscosité d'un polypropylène en mélangeant le polypropylène et du peroxyde, comprenant le fait :
de préparer une extrudeuse-mélangeuse comportant un cylindre (10), une vis (20) agencée en rotation dans le cylindre (10) et ayant une pluralité d'ailes de mélange comportant une première aile de mélange (21) située au niveau du côté le plus en amont et une deuxième aile de mélange (22) située en aval de la première aile de mélange (21), un dispositif d'alimentation en peroxyde (12) pour effectuer une alimentation en peroxyde à une position en amont de la première aile de mélange (21), un premier mécanisme d'étranglement de chemin d'écoulement (31) capable de modifier une superficie d'un chemin d'écoulement pour le polypropylène au niveau d'un côté en aval de la première aile de mélange (21) et en amont de la deuxième aile de mélange (22) pour modifier ainsi un taux de remplissage d'un polypropylène mélangé par la première aile de mélange (21), et un deuxième mécanisme d'étranglement de chemin d'écoulement (36) capable de modifier la superficie du chemin d'écoulement pour le polypropylène au niveau du côté aval de la deuxième aile de mélange (22) pour modifier ainsi un taux de remplissage du polypropylène mélangé par la deuxième aile de mélange (22) ; et
de mélanger le polypropylène et du peroxyde ayant une demi-vie supérieure ou égale à 10 secondes à 200°C en utilisant cette extrudeuse-mélangeuse (1),
dans lequel, au cours du mélange, le chemin d'écoulement pour le polypropylène situé en aval de la première aile de mélange (21) est étranglé par le premier mécanisme d'étranglement de chemin d'écoulement (31) pour augmenter le taux de remplissage du polypropylène au niveau de la première aile de mélange (21) ; et, lorsqu'un débit à l'état fondu du polypropylène en tant que matière première est supérieur ou égal à 7 (g/10 minutes), le chemin d'écoulement pour le polypropylène situé en aval de la deuxième aile de mélange (22) est étranglé par le deuxième mécanisme d'étranglement de chemin d'écoulement (36) pour augmenter le taux de remplissage du polypropylène au niveau de la deuxième aile de mélange (22).

4. Procédé selon la revendication 3, dans lequel :
un taux de remplissage du polypropylène au niveau d'un côté amont d'une partie centrale longitudinale (20c) de la vis (20) dans le cylindre (10) de l'extrudeuse-mélangeuse (1) est augmenté par le premier mécanisme d'étranglement de chemin d'écoulement (31), et le polypropylène ayant le taux de remplissage augmenté est mélangé par la première aile de mélange (21).

5. Extrudeuse-mélangeuse (1) destinée à ajuster la viscosité d'un polypropylène en mélangeant le polypropylène et du peroxyde, comprenant :
un cylindre (10) ;
une vis (20) agencée en rotation dans le cylindre (10) ; et
un dispositif d'alimentation en peroxyde (12) pour effectuer une alimentation en peroxyde à une position en amont de la première aile de mélange (21), **caractérisée en ce que**
la vis (20) a une pluralité d'ailes de mélange comportant une première aile de mélange (21) située au niveau du côté le plus en amont et une deuxième aile de mélange (22) située en aval de la première aile de mélange (21), la première aile de mélange (21) étant située en amont d'une partie centrale longitudinale (20c) de la vis (20) dans le cylindre (10) ; où l'extrudeuse-mélangeuse comprend en outre
un premier mécanisme d'étranglement de chemin d'écoulement (31) situé en aval de la première aile de mélange (21) et en amont de la deuxième aile de mélange (22) et adapté pour étrangler un chemin d'écoulement pour le polypropylène pour modifier ainsi un taux de remplissage du polypropylène mélangé par la première aile de mélange (21) ; et
un deuxième mécanisme d'étranglement de chemin d'écoulement (36) situé en aval de la deuxième aile de mélange (21) et adapté pour étrangler le chemin d'écoulement pour le polypropylène pour modifier ainsi un taux de remplissage du polypropylène mélangé par la deuxième aile de mélange (21).

6. Extrudeuse-mélangeuse selon la revendication 5, dans laquelle
le premier mécanisme d'étranglement de chemin d'écoulement (31) est adapté pour rétrécir une superficie du chemin d'écoulement pour le polypropylène de manière à réduire la superficie à 20% ou moins d'une superficie où le premier mécanisme d'étranglement de chemin d'écoulement (31) est complètement ouvert.

7. Extrudeuse-mélangeuse (1) selon la revendication 5, dans laquelle une longueur L de la vis (20) agencée dans le cylindre (10) est réglée de manière à satisfaire L/D ≥ 30 lorsque D représente le diamètre intérieur du cylindre (10).

8. Extrudeuse-mélange (1) selon la revendication 5, dans laquelle la longueur de la vis (20), une plage d'ajustement pour l'ouverture du premier mécanisme d'étranglement (31) et une plage d'ajustement pour l'ouverture du deuxième mécanisme d'étranglement (36) sont réglées de sorte qu'un temps de séjour total du polypropylène dans l'extrudeuse-mélangeuse (1) soit réglable à 15 secondes ou plus.
